# EUROPÄISCHE PATENTSCHRIFT

(11) **EP 1 456 544 B1**
(45) Veröffentlichungstag und Bekanntmachung des Hinweises auf die Patenterteilung: **30.08.2006**
(21) Anmeldenummer: 02792684.9
(22) Anmeldetag: 20.12.2002
(51) Int. Cl.: F16C 11/06, B60G 7/00

(54) **KUGELGELENK**
BALL-AND-SOCKET JOINT
ARTICULATION SPHERIQUE

(30) Priorität: 20.12.2001 DE 10163147; 01.02.2002 DE 10204319
(43) Veröffentlichungstag der Anmeldung: 15.09.2004
(73) Patentinhaber: ZF Lemförder Metallwaren AG, 49448 Lemförde (DE)
(72) Erfinder: GERCKE, Matthias, 27257 Affinghausen (DE); MAASSMANN, Christian, 49593 Bersenbrück (DE); CASTANET, Jean-Paul, F-43120 Monistrol/Loire (FR); GRÄBER, Jürgen, 32351 Stemwede-Dielingen (DE); CATTERFELD, Thomas, 99867 Gotha (DE)
(86) Internationale Anmeldenummer: PCT/DE2002/004704
(87) Internationale Veröffentlichungsnummer: WO 2003/054399

(56) Entgegenhaltungen:
- EP-A- 0 345 452
- EP-A- 0 556 890
- DE-A- 3 921 408
- GB-A- 1 121 004
- US-B1- 6 190 080

## Beschreibung

Die Erfindung betrifft ein Kugelgelenk für ein Kraftfahrzeug, insbesondere für eine Pendelstütze eines Kraftfahrzeuges nach dem Oberbegriff der Patentansprüche 1 und 2.

Ein derartiges Kugelgelenk ist beispielsweise aus der DE 43 06 006 A1 bekannt. Es weist ein hohlzylinderförmiges Gehäuse auf, in dessen Innenraum eine Lagerschale zur gleitbeweglichen Aufnahme der Gelenkkugel eines Kugelzapfens eingesetzt ist. Die Lagerschale der bekannten, im Aufbau sehr einfach ausgeführten Kugelgelenke besteht aus Kunststoff, der optimale Reibungsverhältnisse für die zu lagernde Gelenkkugel gewährleistet. Die in der genannten Schrift offenbarte Lagerschale verfügt über einen Ringbund, der sich einseitig an der Stirnseite des Gehäuses abstützt. Auf der dem Ringbund gegenüberliegenden Seite ist an der Lagerschale ein Ringkragen angeformt, der im Vormontagezustand bezogen auf die Längsmittenachse der Lagerschale eine axiale Erstreckung und Außenabmessungen aufweist, die den Außenabmessungen der Lagerschale entsprechen. Während des Zusammenbaus des bekannten Kugelgelenkes wird die Lagerschale in das Gehäuse eingesetzt, sodass sich der Ringbund an der Stirnfläche des Gehäuses abstützt und der Ringkragen auf der gegenüberliegenden Gehäuseseite mittels eines Umformverfahrens verformt werden kann. Für das Umformen des Ringkragens wird in der zitierten Schrift ein Ultraschallumformverfahren vorgeschlagen. Nach Abschluss der Ultraschallumformung bildet der Ringkragen eine Wulst am Gehäuse, wodurch die Lagerschale an dem Gehäuse festgesetzt ist.

Ein sehr wesentliches Problem bei den bekannten Kugelgelenkausführungen besteht darin, dass die mittels Ultraschallumformung am Gehäuse festgelegte Lagerschale keine dauerhaft feste Verbindung mit dem Gehäuse eingeht und somit über die Lebensdauer des Kugelgelenkes hinweg eine Lockerung der Lagerschale nicht auszuschließen ist. Die durch die Relativbewegungen zwischen Gehäuse und Lagerschale entstehende Reibung führt zu einem Anstieg des Verschleißes, so dass das Kugelgelenk schließlich ausfallen kann. Durch den zunehmenden Verschleiß der Lagerschale wirken zudem eindringende Verunreinigungen infolge des Abriebes wie Beschleunigungsfaktoren für den Ausfall des Gelenkes.

Um zu verhindern, dass sich die Lagerschale lockert und beispielsweise Rotationsbewegungen um die Längsmittenachse des Gehäuses vollführt, werden bislang nach der Herstellung des Gehäuserohlings Kerben in dessen Randbereich eingebracht, in die später der mittels Ultraschallumformung erweichte Werkstoff der Lagerschale zumindest abschnittsweise einfließen kann. Die durch ein Prägeverfahren in dem Gehäuse erzeugten Kerben führen jedoch zu Verformungen des Gehäuses, so dass dieses nicht akzeptable Toleranzen, Unrundheiten, Konizitäten und/oder Fehler in der Planparallelität aufweist.
Es konnte ferner festgestellt werden, dass bei der Ultraschallumformung der Materialfluss des erweichten Lagerschalenmaterials in die Kerben des Gehäuses zum Teil nur begrenzt erfolgt. Somit ist auch bei diesen verbesserten Ausführungen ein Lösen zwischen Lagerschale und Gehäuse und eine damit gegebene Beweglichkeit der Lagerschale relativ zum Gehäuse nicht mit Sicherheit auszuschließen.

Der Erfindung liegt die technische Aufgabe zu Grunde, ein Kugelgelenk zu entwickeln, das neben einem einfachen Aufbau eine zuverlässige Sicherung der Lagerschale gegen Bewegungen innerhalb des Gehäuses ermöglicht.

Gelöst wird diese technische Aufgabenstellung mit den Merkmalen der unabhängigen Patentansprüche.
Weitere Ausgestaltungen sind Gegenstand der sich anschließenden Unteransprüche.

Die Kugelgelenke weisen übereinstimmend ein wenigstens einseitig offenes Gehäuse auf, in dessen Innenraum eine Lagerschale eingesetzt ist, die ihrerseits eine Gelenkkugel eines Kugelzapfens gleitbeweglich aufnimmt.

Entsprechend einem ersten Vorschlag der vorliegenden Erfindung werden in dem Innenraum, entlang seiner Innenmantelfläche Erhebungen und/oder Vertiefungen vorgesehen. Die Lagerschale weist ferner im Verhältnis zur Innenmantelfläche des Gehäuses ein Übermaß auf, sodass quasi eine Presspassung gegeben ist. Dadurch erfolgt eine zumindest teilweise plastische Verformung der Außenoberfläche der Lagerschale. Diese ist somit formschlüssig in das Gehäuse einsetzbar.

Eine weitere Lösung der eingangs gestellten Aufgabenstellung besteht nach dem unabhängigen Anspruch 2 darin, dass der Innenraum des Gehäuses einen polygonalen Querschnitt aufweist, so dass die mit einem Übermaß zur Innenmantelfläche ausgestattete Lagerschale unter teilweise plastischer Verformung ihrer Außenoberfläche formschlüssig in das Gehäuse einsetzbar ist.

Das erfindungsgemäße Kugelgelenk ist damit nicht nur einfach herzustellen. Es weist ferner einen einfachen Aufbau auf, ist damit kostengünstig und gewährleistet zudem eine sichere Fixierung der Lagerschale innerhalb des Gehäuses.

Zur Vereinfachung der Fertigung und zur Reduzierung der Fertigungstiefe ist es im Sinne der Erfindung vorteilhaft, die Erhebungen und/oder Vertiefungen über die gesamte Höhe des Gehäuses vorzusehen.
Diesem Gedanken folgend, wird gemäß einer weiteren Ausgestaltung der Erfindung vorgeschlagen, dass die Erhebungen und/oder Vertiefungen durch ein Umformverfahren in den Innenraum des Gehäuses eingebracht werden. Als Umformverfahren kann beispielsweise ein Tiefziehverfahren zum Einsatz kommen.

Darüber hinaus ist es ebenso möglich, die Innenmantelfläche durch ein Räumverfahren mit den Erhebungen und/oder Vertiefungen auszustatten.

Das Gehäuse sollte eine möglichst einfache Geometrie aufweisen, wozu es gemäß einer Weiterbildung der Erfindung als Hohlzylinder gestaltet ist. Ferner kann es durch ein Kaltfließpressverfahren oder mittels einer spanenden Bearbeitung hergestellt werden.

Eine weitere sehr vorteilhafte Ausgestaltung der Erfindung besteht darin, die Lagerschale einseitig mit einer Austrittsöffnung auszustatten, durch die ein mit der Gelenkkugel verbundener Anschlusszapfen des Kugelzapfens herausragt und die Lagerschale auf der der Austrittsöffnung gegenüberliegenden Seite geschlossen auszuführen. Die geschlossene Seite der Lagerschale gewährleistet somit einerseits eine Abdichtung des Kugelgelenkes, zum anderen wird hiermit eine Lagerfläche bereitgestellt und weiterhin ein zusätzlicher Verschlussdeckel eingespart. Die zapfenseitige Abdichtung des Kugelgelenkes kann in an sich bekannter Weise durch einen Dichtungsbalg erfolgen.

Neben der zuvor beschriebenen Sicherung der Lagerschale gegen eine Rotationsbewegung innerhalb des Gehäuses ist es ferner erforderlich, die Lagerschale auch in axialer Richtung zu fixieren. Hierzu wird vorgeschlagen, die Lagerschale einseitig mit einem Ringbund auszustatten, der sich nach dem Einbau der Lagerschale an einer Stirnfläche des Gehäuses abstützt. Die diesem Ringbund in axialer Richtung gegenüberliegende Seite der Lagerschale weist vorzugsweise einen sich vor der Montage axial erstreckenden, zur Herstellung einer festsitzenden Verbindung zwischen Lagerschale und Gehäuse beim Zusammenbau des Kugelgelenkes umgeformten Ringkragen auf. Dieser Ringkragen kann nach dem Einsetzen der Lagerschale in das Gehäuse mittels eines geeigneten Umformverfahrens oder eines Schweißverfahrens umgeformt werden. Als Umformverfahren sind beispielsweise die Ultraschallumformung oder Reibungsumformung einsetzbar. Bei den Reibungsumformverfahren wird mittels eines rotierenden Umformwerkzeugs im Bereich des Ringkragens der Lagerschale Reibungswärme erzeugt wird, welche die Umformung dieses lokalen Bereiches ermöglicht.

Um eine zusätzliche Sicherung der Lagerschale in dem Gehäuse zu erreichen und erforderlichenfalls die Abdichtung in diesem Kontaktbereich zu verbessern, kann es darüber hinaus angebracht sein, zusätzlich ein Bindemittel einzubringen, wobei bevorzugt ein Klebstoff als Bindemittel verwendbar ist.

Bei Kugelgelenken der vorliegenden Bauart kann es vorkommen, dass das Gehäuse nach dem Ausbilden der Erhebungen und/oder Vertiefungen einen für die Montage des Kugelgelenks zu geringen Durchmesser aufweist. Dies kann durch Ungenauigkeiten (Streuungen) bei der Bearbeitung des Gehäuses, wie zum Beispiel beim Kaltfließpressen, beim Schweißen oder beim Beschichten, hervorgerufen werden. Es ist aber auch möglich, dass das Gehäuse nachträglich an Maßschwankungen anderer Bauteile angepasst werden muss. Deshalb kann bei einem derartigen Gehäuse eine Vergrößerung des Durchmessers auf einen für die Montage des Kugelgelenks geeigneten Enddurchmesser erforderlich sein, was mit einem Spreizwerkzeug durchgeführt wird, welches durch die in dem Gehäuse vorgesehene Öffnung zumindest teilweise in das Gehäuse eingeführt und anschließend gespreizt wird. Beim Spreizen drückt das Spreizwerkzeug gegen die Innenwandung des Gehäuses, wodurch dieses so lange auseinandergedrückt bzw. aufgeweitet wird, bis der Durchmesser des Gehäuses den gewünschten Enddurchmesser erreicht hat. Bei diesem Aufweiten des Gehäuses kann es vorkommen, dass die Erhebungen und/oder Vertiefungen von dem Spreizwerkzeug niedergedrückt werden, so dass die erfindungsgemäße formschlüssige Verdrehsicherung zwischen Lagerschale und Gehäuse beeinträchtigt wird.

Das erfindungsgemäße Kugelgelenk für ein Kraftfahrzeug, insbesondere für eine Pendelstütze eines Kraftfahrzeuges, weist zur Lösung dieses Problems ein wenigstens einseitig offenes Gehäuse auf, in dessen Innenraum eine Lagerschale eingesetzt ist, die ihrerseits eine Gelenkkugel eines Kugelzapfens gleitbeweglich aufnimmt, wobei der Innenraum entlang seiner Innenmantelfläche Erhebungen und/oder Vertiefungen aufweist, so dass die mit einem Übermaß zur Innenmantelfläche versehene Lagerschale unter teilweiser plastischer Verformung ihrer Außenoberfläche formschlüssig in das Gehäuse eingesetzt ist. Dabei weist die Innenmantelfläche die wirksame Länge der Erhebungen und/oder Vertiefungen verkürzende Druckzonen auf.
Zum Aufweiten des Gehäuses greift ein erfindungemäßes Spreizwerkzeug ausschließlich im Bereich der Druckzonen an der Innenmantelfläche des Gehäuses an, so dass die außerhalb der Druckzonen ausgebildeten Erhebungen und/oder Vertiefungen während des Aufweitens des Gehäuses nicht niedergedrückt werden und für die formschlüssige Verbindung mit der Lagerschale zur Verfügung stehen.

Die Erhebungen und/oder Vertiefungen werden vor dem Aufweiten ausgebildet und können nach einer ersten Alternative ausschließlich außerhalb der Druckzonen vorgesehen sein. In diesem Fall ist die für die formschlüssige Verbindung von Gehäuse und Lagerschale wirksame Länge der Erhebungen und/oder Vertiefungen schon vor dem Aufweiten verkürzt. Nach einer zweiten Alternative erstrecken sich die Erhebungen und/oder Vertiefungen aber vor dem Aufweiten in die Bereiche der Druckzonen hinein. Besonders bevorzugt sind dabei die Erhebungen und/oder Vertiefungen vor dem Aufweiten über die gesamte Höhe des Gehäuses ausgebildet, was fertigungstechnisch mittels eines Tiefziehverfahrens oder mittels eines Räumwerkzeugs besonders einfach und damit kostengünstig realisiert werden kann. In diesem Fall werden die Erhebungen und/oder Vertiefungen während des Aufweitens von dem Spreizwerkzeug im Bereich der Druckzonen niedergedrückt, so dass sie nach dem Aufweiten niedriger bzw. flacher als außerhalb der Druckzonen ausgebildet sind. Auch dadurch wird die für die formschlüssige Verbindung von Gehäuse und Lagerschale wirksame Länge der Erhebungen und/oder Vertiefungen verkürzt, da die im Bereich der Druckzonen niedergedrückten Erhebungen und/oder Vertiefungen nur noch eingeschränkt zu dieser formschlüssigen Verbindung beitragen können.

Die Druckzonen können unregelmäßig über die Innenmantelfläche verteilt angeordnet sein. Bevorzugt liegen die Druckzonen aber auf Ringflächen, deren Mittelpunkte bzw. Mittelachsen auf der Längsmittenachse liegen. Somit kann das Spreizwerkzeug einfacher hergestellt werden, da die an die Druckzonen angreifenden Angriffsflächen des Spreizwerkzeugs ringförmig ausgebildet sind. Ferner wird dadurch die auf das Gehäuse wirkende Kraft beim Aufweiten gleichmäßiger verteilt.

Besonders vorteilhaft ist es, wenn eine der Ringflächen unmittelbar an die Gehäuseöffnung angrenzt. Dies hat zur Folge, dass die Kontaktfläche von Lagerschale und Gehäuse im Bereich der Öffnung reduziert ist, so dass Verunreinigungen schwieriger in den Berührungsbereich von Lagerschale und Gehäuse eindringen können. In Anlehnung an diese Weiterbildung der Erfindung ist unmittelbar an beide Stirnseiten angrenzend jeweils eine der Ringflächen vorgesehen, wenn das Gehäuse in Form eines an den beiden Stirnseiten offenen Hohlzylinders ausgebildet ist. Ein solcher kann besonders einfach durch ein Kaltfließpressverfahren oder mittels einer spanenden Bearbeitung hergestellt werden.

Die Erhebungen und/oder Vertiefungen können zum Beispiel spiralförmig oder geradlinig und gegenüber der Längsmittenachse geneigt verlaufen. Bevorzugt verlaufen die Erhebungen und/oder Vertiefungen aber geradlinig und parallel zur Längsmittenachse des Gehäuses, so dass die Ausbildung der Erhebungen und/oder Vertiefungen mit einem einfachen Räumwerkzeug oder durch Tiefziehen des Gehäusekörpers erfolgen kann. Diese Verfahren sind besonders kostengünstig.

Die Montage des erfindungsgemäßen Kugelgelenkes erfolgt derart, dass zunächst der mit einer Gelenkkugel ausgestattete Kugelzapfen in die hierfür vorgesehene Ausnehmung der Lagerschale eingesetzt wird. Diese Baugruppe, bestehend aus Lagerschale und Kugelzapfen, wird nachfolgend von einer Seite des Gehäuses her in den Innenraum des Gehäuses eingeführt. Da die Lagerschale im Verhältnis zur Innenmantelfläche des Gehäuses ein Übermaß aufweist, erfolgt bei ihrem Einsetzen in das Gehäuse eine zumindest teilweise plastische Verformung der Außenoberfläche der Lagerschale, so dass quasi eine Presspassung hergestellt und die Lagerschale formschlüssig mit dem Gehäuse verbunden wird. Durch diese plastische Verformung der Außenoberfläche der Lagerschale wird bereits während des Zusammenbaus des Kugelgelenkes eine Verdrehsicherung etabliert, d. h. die Vermeidung einer Rotationsbewegung der Lagerschale um die Längsmittenachse relativ zum Gehäuse. Die Längsmittenachsen von Gehäuse und Lagerschale fallen beim montierten Kugelgelenk zusammen, sie sind demnach koaxial.

Das erfindungsgemäße Spreizwerkzeug weist mehrere unabhängig voneinander bewegbare Segmente auf, die zum Ausbilden der rotationssymmetrischen Form des Spreizwerkzeugs um dessen Längsachse herum angeordnet sind. An den die Mantelfläche des Spreizwerkzeugs bildenden Außenflächen der Segmente sind die durch Nuten voneinander getrennten Angriffsflächen zum Aufweiten des Gehäuses vorgesehen.

Gemäß einer Weiterbildung sind die Angriffsflächen auf Ringflächen angeordnet, wobei die Nuten als Ringnuten ausgebildet sind, die in Richtung der Längsachse bevorzugt ein sägzahnförmiges Profil aufweisen.

Gemäß einer Weiterbildung ist entlang der Längsachse in dem Spreizwerkzeug ein Durchgangsloch vorgesehen, das zumindest zum Teil konisch verläuft. Der Steigungswinkel des Konus beträgt dabei bevorzugt 5°.

Anhand der Figurendarstellungen soll nachfolgend die erfindungsgemäße Lösung anhand von zwei bevorzugten Ausführungsbeispielen näher erläutert werden. Es zeigen:
- Figur 1: ausschnittsweise und im Schnitt ein erfindungsgemäßes Kugelgelenk im Vormontagezustand,
- Figur 2: ein erfindungsgemäßes montiertes Kugelgelenk im Schnitt,
- Figur 3: ein Gehäuse als Einzelteil in räumlicher Darstellung
- Figur 4: eine Schnittdarstellung eines weiteren Gehäuses für ein erfindungsgemäßes Kugelgelenk,
- Figur 5: eine Schnittansicht des Gehäuses nach Figur 3 nach dem Aufweiten,
- Figur 6: eine Schnittansicht einer Ausführungsform des erfindungsgemäßen Spreizwerkzeugs zum Aufweiten des Gehäuses,
- Figur 7: eine Seitenansicht der Ausführungsform nach Figur 6 und
- Figur 8: die Draufsicht auf die Ausführungsform nach Figur 6.

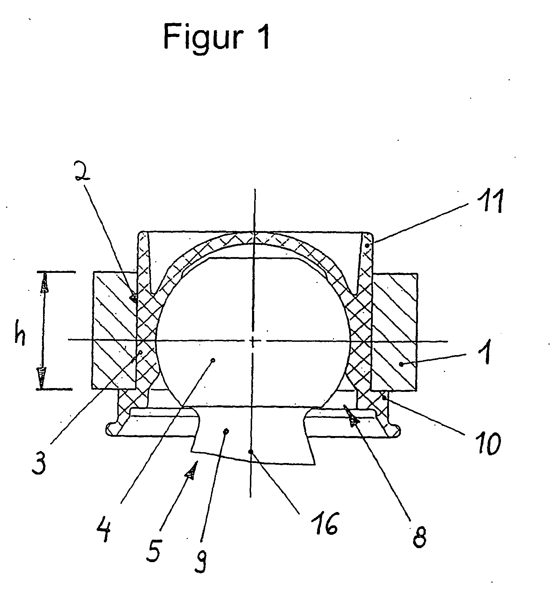

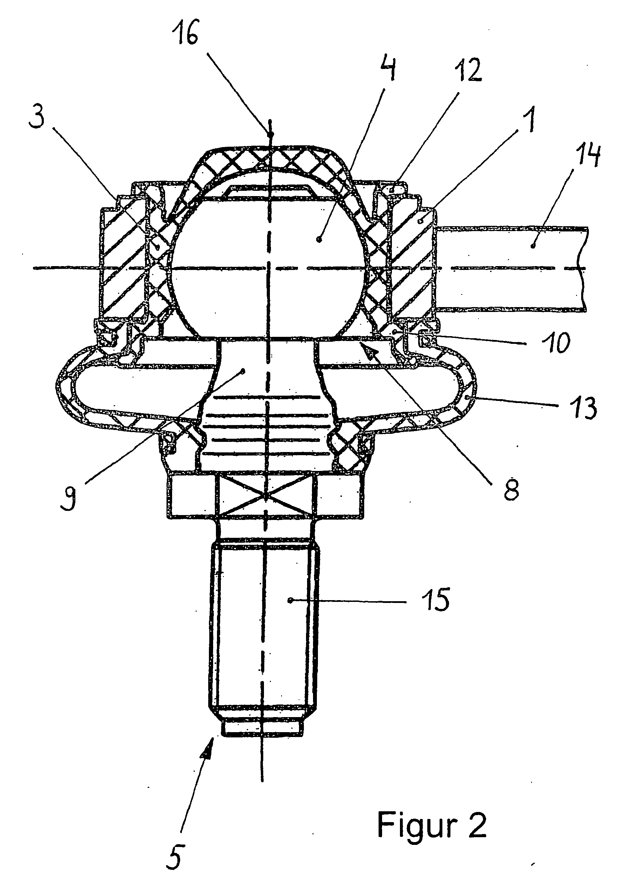

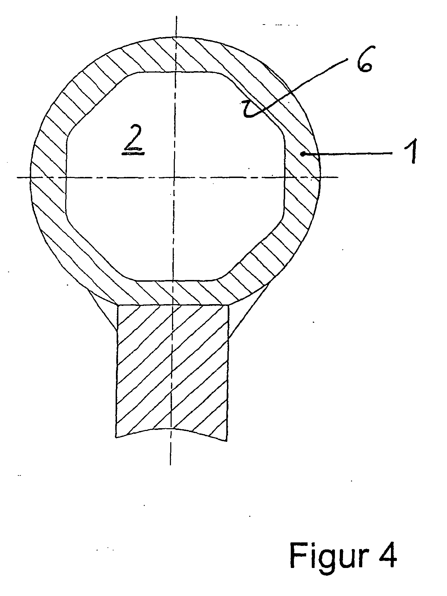

Das in den Figuren gezeigte Kugelgelenk für ein Kraftfahrzeug besteht aus einem Gehäuse 1, das vorliegend als ein ringförmiges Gehäuse ausgestaltet ist. Das Gehäuse 1 weist einen Innenraum 2 auf, der bei den Ausführungen der Figuren 1 bis 3 einen kreisförmigen Querschnitt und bei der Darstellung in Figur 4 einen polygonalen Querschnitt aufweist.
In den Innenraum 2 des Gehäuses 1 ist eine Lagerschale 3 eingesetzt. Die Lagerschale 3 besteht aus Kunststoff und dient der gleitbeweglichen Aufnahme und Lagerung der Gelenkkugel 4 eines insgesamt mit 5 bezeichneten Kugelzapfens. An die Gelenkkugel 4 schließt sich ein Anschlusszapfen 9 des Kugelzapfens 5 an, der, wie dies insbesondere aus der Figur 2 ersichtlich wird, mit einem Anschlussgewinde 15 zum Anschluss an ein Kraftfahrzeugbauteil versehen ist.
Darüber hinaus geht aus der Figur 2 hervor, dass an dem Gehäuse 1 ein Schaft 14 befestigt ist. Dieser Schaft 14 wurde bei dem Beispiel einstückig mit dem Gehäuse 1 ausgeführt.
Der Innenraum 2 des Gehäuses 1 weist eine Innenmantelfläche 6 auf, die über ihren Umfang verteilt mit Erhebungen und/oder Vertiefungen 7 versehen ist. Die Herstellung eines erfindungsgemäßen Kugelgelenkes erfolgt dergestalt, dass, wie dies aus Figur 1 hervorgeht, zunächst die Gelenkkugel 4 des Kugelzapfens 5 in die Lagerschale 3 eingesetzt wird. Von einer Seite des Gehäuses 1 her wird nun die Lagerschale 3 in den Innenraum 2 des Gehäuses eingeführt. Da die Lagerschale erfindungsgemäß ein Übermaß zu dem Innenraum 2 aufweist, kann die Verbindung zwischen Lagerschale 3 und Gehäuse 1 nur über eine Presspassung erreicht werden, so dass die Außenmantelfläche der Lagerschale 3 zumindest bereichsweise plastisch verformt wird, während diese in das Gehäuse 1 eingesetzt wird.
Die Lagerschale 3 weist einen Ringbund 10 auf, der sich einseitig gegen eine Stirnfläche des Gehäuses 1 abstützt. Auf der dem Ringbund 10 gegenüberliegenden Seite ist die Lagerschale 3 mit einem Ringkragen 11 ausgestattet, der im noch nicht fertig montierten Zustand in Figur 1 gezeigt ist. Dieser Ringkragen 11 wird zur Fertigstellung der Verbindung zwischen Lagerschale 3 und Gehäuse 1 mittels einer Ultraschallsonotrode umgeformt und bildet dann eine Materialwulst 12, wie sie in der Figur 2 dargestellt ist. Somit wird eine axiale Fixierung der Lagerschale 3 innerhalb des Gehäuses 1 durch den Ringbund 10 und den zu einer Materialwulst 12 umgeformten Ringkragen 11 erreicht. Die Sicherung der Lagerschale 3 gegen eine Rotationsbewegung um die Längsmittenachse 16 erfolgt durch die Erhebungen und/oder Vertiefungen 7 an der Innenmantelfläche 6 des Gehäuses 1.

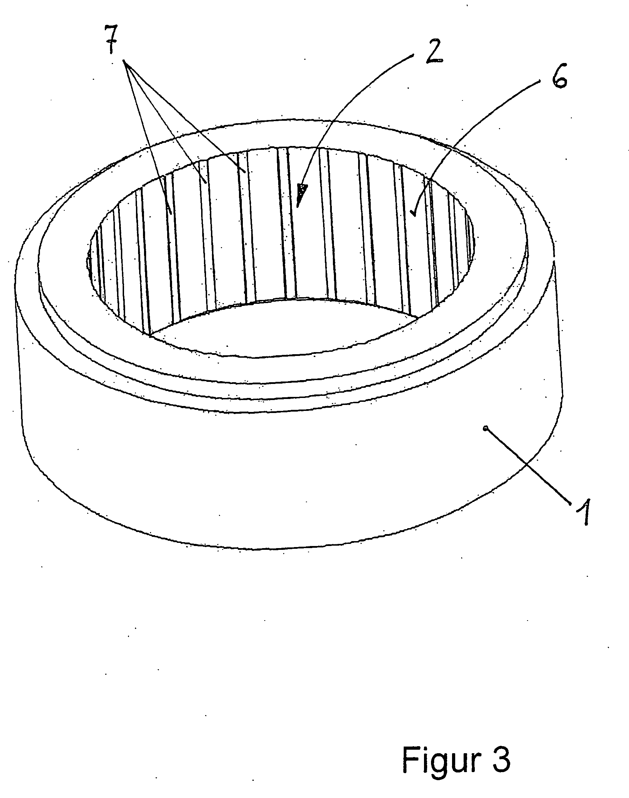

Die Lagerschale 3 ist, wie dies aus der Figur 2 anschaulich hervorgeht, einseitig geschlossen ausgeführt. Somit kann ein zusätzliches Deckelelement zum Verschließen des Kugelgelenkes eingespart werden. Ferner bildet die Verschlussseite der Lagerschale 3 eine zusätzliche Lagerfläche für die Gelenkkugel 4 des Kugelzapfens 5. Bei der Ausführung in Figur 2 ist die Gelenkkugel 4 als separates Bauteil hergestellt worden und mit dem Anschlusszapfen 9 verbunden. Beide Bauteile bilden gemeinsam den Kugelzapfen 5, der endseitig über das Anschlussgewinde 15 verfügt. Der Anschlusszapfen 9 ragt durch eine Austrittsöffnung 8 der Lagerschale 3 aus dieser heraus. Im Bereich des Ringbundes 10 der Lagerschale 3 weist diese außenseitig eine Nut zur Aufnahme eines Dichtungsbalges 13 auf. Das andere Ende des Dichtungsbalges 13 liegt dichtend an dem Anschlusszapfen 9 des Kugelzapfens 5 an.
Um die Fertigung eines Gehäuses, wie es beispielhaft in der Figur 3 als Einzelteil gezeigt wird, zu vereinfachen, wird dieses als Kaltfließpressteil hergestellt. Es ist mit einer Innenmantelfläche 6 versehen, in die Erhebungen und/oder Vertiefungen 7 eingebracht sind. Die Erhebungen/Vertiefungen 7 sind hier mittels eines Räumwerkzeuges in einem Arbeitsgang hergestellt worden. Der somit gebildete Innenraum 2 des Gehäuses 1 dient der späteren Aufnahme der Lagerschale 3 in der vorbeschriebenen Weise.

Eine weitere mögliche Ausführungsform eines Gehäuses 1 für ein erfindungsgemäßes Kugelgelenk geht aus der Figur 4 hervor. Hierbei weist das Gehäuse 1 eine Außenmantelfläche mit kreisförmigem Querschnitt auf, während die Innenmantelfläche 6 des Gehäuses 1 über einen polygonalen Querschnitt verfügt. Der somit entstandene Innenraum 2 dieses Gehäuses wird ebenfalls über eine plastische Verformung mit der Lagerschale 3 verbunden, so dass dadurch eine Sicherung der Lagerschale gegen eine Rotationsbewegung um die Längsmittenachse 16 gewährleistet ist.

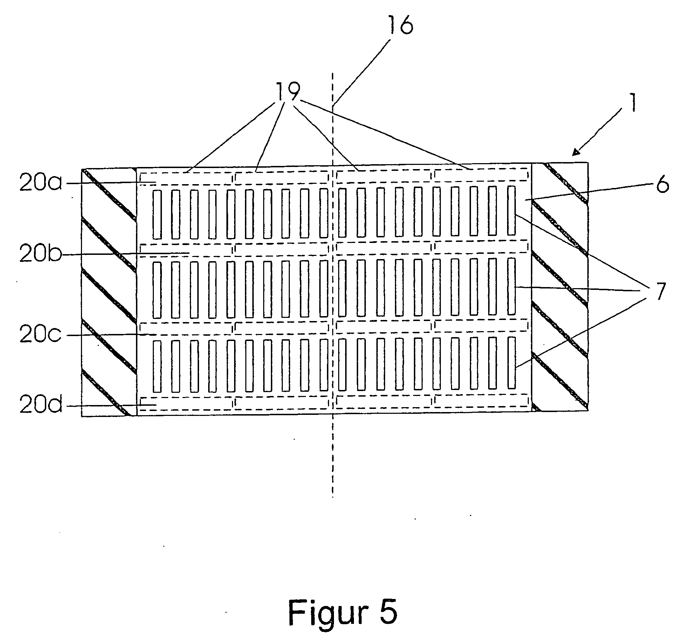

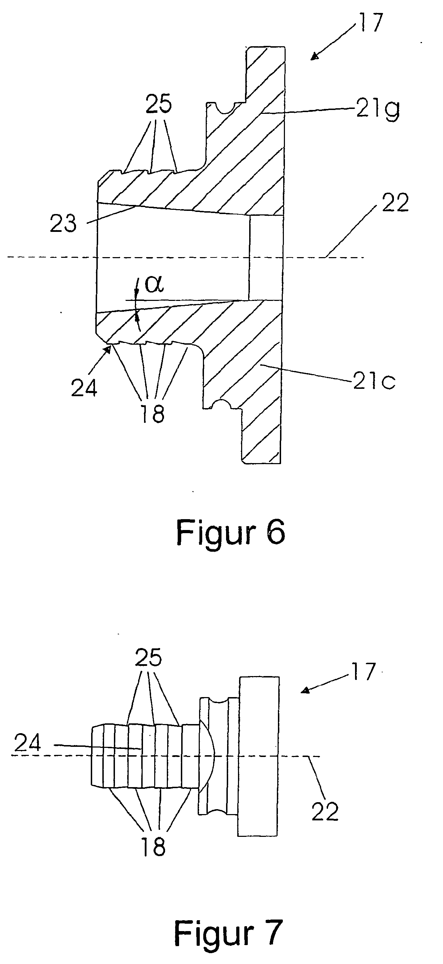

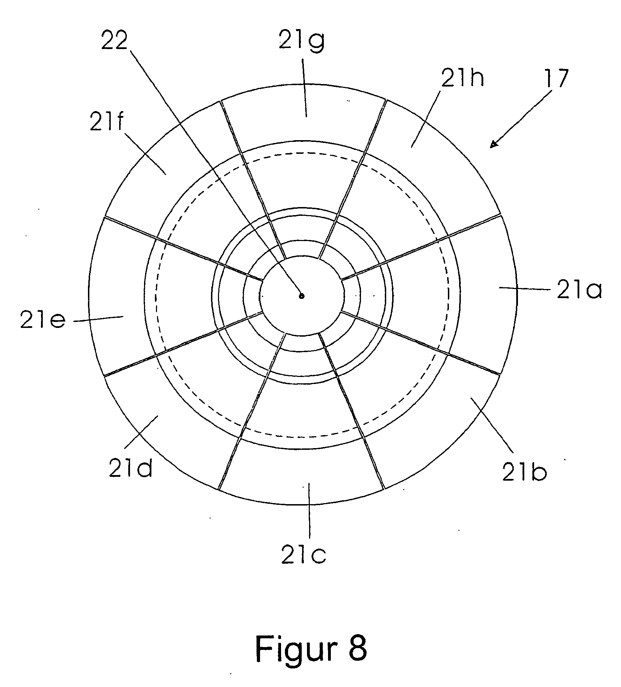

Die Erhebungen/Vertiefungen 7 werden zunächst über die gesamte Höhe h des Gehäuses 1 ausgebildet (siehe Figur 3), welches anschließend über einen Verformungsschritt bis auf den für die Montage des Kugelgelenks erforderlichen Durchmesser aufgeweitet wird. Für diese Aufweitung wird ein Spreizwerkzeug 17 (siehe Figuren 6 bis 8) verwendet, welches mit Angriffsflächen 18 lokal an die Innenmantelfläche 6 des Gehäuses 1 angreift. Während des Aufweitens werden die Erhebungen/Vertiefungen 7 im Bereich der Angriffsflächen 18 niedergedrückt, so dass sich Druckzonen 19 (siehe Figur 5) ergeben, in denen die Erhebungen und/oder Vertiefungen 7 nach dem Aufweiten entweder vollständig zerstört oder zumindest niedriger bzw. flacher geworden sind. Die Druckzonen 19 liegen auf vier Ringflächen 20a, 20b, 20c und 20d, deren Mittelpunkt bzw. Mittelachse auf der Längsmittenachse 16 des Gehäuses liegt, wobei insbesondere die sich unmittelbar an die Stirnseiten des Gehäuses 1 anschließenden Ringflächen 20a und 20d dazu beitragen, dass über die Stirnseiten weniger Schmutz in den Berührungsraum von Gehäuse 1 und Lagerschale 3 eindringen kann.

Aus den Figuren 6 bis 8 sind unterschiedliche Ansichten einer Ausführungsform des erfindungsgemäßen Spreizwerkzeugs 17 ersichtlich. Das Spreizwerkzeug weist separate Segmente 21 a bis 21h auf, die hinsichtlich der Längsachse 22 des Spreizwerkzeugs 17 radial nach außen bewegt werden können. Diese Bewegung wird dadurch erzeugt, dass ein Bolzen (nicht gezeigt), durch einen in dem Spreizwerkzeug 17 vorgesehenen Konus 23 gedrückt oder gezogen wird, dessen kleinster Durchmesser geringer als der größte Durchmesser dieses Bolzens ist. Der Bolzen kann zum Beispiel die Form eines Zylinders oder eines Kegelstumpfes aufweisen.

Zum Aufweiten des Gehäuses 1 wird das Spreizwerkzeug 17 in das Gehäuse 1 eingesetzt, wonach der Bolzen durch den Konus 23 gedrückt oder gezogen wird. Die sich daraufhin radial nach außen bewegenden separaten Segmente 21a bis 21h drücken dann derart gegen die Innenmantelfläche 6 des Gehäuses 1, dass dieses aufgeweitet wird. Durch die Abmessungen des Spreizwerkzeuges 17, insbesondere durch den Steigungswinkel α des Konus 23 und durch den Durchmesser des Bolzens kann festgelegt werden, bis auf welchen Durchmesser das Gehäuse 1 aufgeweitet wird.

Die beim Aufweiten gegen die Innenmantelfläche 6 drückende Außenfläche 24 des Spreizwerkzeugs 17 bzw. der Segmente 21a bis 21h weist mehrere im Abstand zueinander ausgebildete Ringnuten 25 auf, deren Zentrum auf der Längsachse 22 liegt. Zwischen den sägezahnförmig ausgebildeten Ringnuten 25 liegen die Angriffsflächen 18, die beim Aufweiten gegen die Innenmantelfläche 6 des Gehäuses 1 drücken und so die Druckzonen 19 ausbilden. Je mehr Angriffsflächen 18 vorhanden sind, um so gleichmäßiger kann das Gehäuse 1 aufgeweitet werden, um so weniger wirksame Erhebungen/Vertiefungen 7 stehen dann aber auch nach dem Aufweiten für den Formschluss von Lagerschale 3 und Gehäuse 1 zur Verfügung. Gemäß der Ausführungsform sind vier Angriffsflächen 18 mit drei dazwischenliegenden Ringnuten 25 vorgesehen, was einen für die Anwendung guten Kompromiss darstellt. Die nach dieser Ausführungsform sägezahnförmigen Ringnuten 25 sorgen zusätzlich dafür, dass sich die Sägezahnform zumindest teilweise an der Innenmantelfläche 6 mit möglichst scharfen Kanten abbildet, so dass die Ausziehkräfte für die Lagerschale 3 nach deren Einsetzen in das Gehäuse 1 - ähnlich wie bei einem Widerhaken - erhöht werden.

### Bezugszeichenliste

- 1.: Gehäuse
- 2.: Innenraum
- 3.: Lagerschale
- 4.: Gelenkkugel
- 5.: Kugelzapfen
- 6.: Innenmantelfläche
- 7.: Erhebung/Vertiefung
- 8.: Austrittsöffnung
- 9.: Anschlußzapfen
- 10.: Ringbund
- 11.: Ringkragen
- 12.: Materialwulst
- 13.: Dichtungsbalg
- 14.: Schaft
- 15.: Anschlußgewinde
- 16.: Längsmittenachse
- 17.: Spreizwerkzeug / Spreizdom
- 18: Angriffsflächen
- 19: Druckzonen
- 20a-20d: Ringflächen
- 21a-21h: Segmente
- 22: Längsachse
- 23: Konus
- 24: Außenfläche
- 25: Ringnuten
- h: Höhe

## Patentansprüche

1. Kugelgelenk für ein Kraftfahrzeug, insbesondere für eine Pendelstütze eines Kraftfahrzeuges mit einem wenigstens einseitig offenen Gehäuse (1), in dessen Innenraum (2) eine Lagerschale (3) eingesetzt ist, die ihrerseits eine Gelenkkugel (4) eines Kugelzapfens (5) gleitbeweglich aufnimmt,
**dadurch gekennzeichnet, dass**
der Innenraum (2) entlang seiner Innenmantelfläche (6) Erhebungen und/oder Vertiefungen (7) aufweist, sodass die mit einem Übermaß zur Innenmantelfläche (6) versehene Lagerschale (3) unter teilweiser plastischer Verformung ihrer Außenoberfläche formschlüssig in das Gehäuse (1) eingesetzt ist.

2. Kugelgelenk für ein Kraftfahrzeug, insbesondere für eine Pendelstütze eines Kraftfahrzeuges mit einem wenigstens einseitig offenen Gehäuse (1), in dessen Innenraum (2) eine Lagerschale (3) eingesetzt ist, die ihrerseits eine Gelenkkugel (4) eines Kugelzapfens (5) gleitbeweglich aufnimmt,
**dadurch gekennzeichnet, dass**
der Innenraum (2) des Gehäuses (1) einen polygonalen Querschnitt aufweist, sodass die mit einem Übermaß zur Innenmantelfläche (6) versehene Lagerschale (3) unter teilweiser plastischer Verformung ihrer Außenoberfläche formschlüssig in das Gehäuse (1) eingesetzt ist.

3. Kugelgelenk nach Anspruch 1,
**dadurch gekennzeichnet, dass**
sich die Erhebungen und/oder Vertiefungen (7) über die gesamte Höhe (h) des Gehäuses (1) erstrecken.

4. Kugelgelenk nach Anspruch 1 oder 3,
**dadurch gekennzeichnet, dass**
die Erhebungen und/oder Vertiefungen (7) durch Umformverfahren erzeugt sind.

5. Kugelgelenk nach einem der vorstehend genannten Ansprüche,
**dadurch gekennzeichnet, dass**
das Gehäuse (1) eine Hohlzylinderform aufweist.

6. Kugelgelenk nach einem der vorstehend genannten Ansprüche,
**dadurch gekennzeichnet, dass**
das Gehäuse (1) durch ein Kaltfließpressverfahren oder durch spanende Bearbeitung hergestellt ist.

7. Kugelgelenk nach einem der vorstehend genannten Ansprüche,
**dadurch gekennzeichnet, dass**
die Lagerschale (3) einseitig eine Austrittsöffnung (8) aufweist, durch die ein mit der Gelenkkugel (4) verbundener Anschlußzapfen (9) des Kugelzapfens (5) herausragt und die Lagerschale (3) auf der der Austrittsöffnung (8) gegenüberliegenden Seite geschlossen ausgeführt ist.

8. Kugelgelenk nach einem der vorstehend genannten Ansprüche,
**dadurch gekennzeichnet, dass**
die Lagerschale (3) einseitig einen Ringbund (10) aufweist, der sich nach dem Einbau der Lagerschale (3) an einer Stirnfläche des Gehäuses (1) abstützt und die diesem Ringbund (10) in axialer Richtung gegenüberliegende Seite der Lagerschale (3) einen sich vor der Montage axial erstreckenden, zur Herstellung einer festsitzenden Verbindung zwischen Lagerschale und Gehäuse (1) umgeformten Ringkragen (11) aufweist.

9. Kugelgelenk nach Anspruch 8,
**dadurch gekennzeichnet, dass**
der Ringkragen (11) mittels eines Schweißverfahrens oder eines Rollverfahrens umgeformt ist.

10. Kugelgelenk nach einem der vorstehend genannten Ansprüche,
**dadurch gekennzeichnet, dass**
zwischen Lagerschale (3) und Gehäuse (1) ein Bindemittel, insbesondere ein Klebstoff eingebracht ist.

11. Kugelgelenk für ein Kraftfahrzeug nach Anspruch 1 oder 2,
**dadurch gekennzeichnet, dass**
die Innenmantelfläche (6) die wirksame Länge der Erhebungen und/oder Vertiefungen (7) verkürzende Druckzonen (19) aufweist.

12. Kugelgelenk nach Anspruch 11, **dadurch gekennzeichnet, dass**
die Druckzonen (19) auf wenigstens zwei im Abstand zueinander angeordneten Ringflächen (20a-20d) liegen, deren Mittelpunkte bzw. Mittelachsen auf der Längsmittenachse (16) des Gehäuses (1) liegen.

13. Kugelgelenk nach Anspruch 12, **dadurch gekennzeichnet, dass**
eine der Ringflächen (20a) unmittelbar an die wenigstens eine Gehäuseöffnung angrenzt.

14. Kugelgelenk nach Anspruch 12, **dadurch gekennzeichnet, dass**
das Gehäuse (1) eine an beiden Stirnseiten offene Hohlzylinderform aufweist und an jede beiden Gehäuseöffnungen jeweils eine der Ringflächen (20a, 20d) unmittelbar angrenzt.

15. Kugelgelenk nach einem der Ansprüche 11 bis 14, **dadurch gekennzeichnet, dass**
die Erhebungen und/oder Vertiefungen (7) parallel zur Längsmittenachse (16) des Gehäuses (1) verlaufen.

16. Kugelgelenk nach einem der Ansprüche 11 bis 15, **dadurch gekennzeichnet, dass**
an der Innenmantelfläche (6) scharfe Kanten oder sägezahnartige Strukturen ausgebildet sind, durch die die Auszugskraft zur Entfernung der Lagerschale (3) aus dem Gehäuse (1) erhöht ist.

## Claims

1. Ball-and-socket joint for a motor vehicle, in particular for a pendulum support of a motor vehicle, with a housing (1) which is open at least on one side and in the interior space (2) of which a bearing shell (3) is inserted, which shell in turn holds a joint ball (4) of a ball pin (5) such that it can slide,
**characterised in that**
the interior space (2) comprises elevations and/or depressions (7) along its inner surface area (6), so that the bearing shell (3), which is oversized relative to the inner surface area (6), is inserted positively in the housing (1) while its outer surface undergoes plastic deformation in part.

2. Ball-and-socket joint for a motor vehicle, in particular for a pendulum support of a motor vehicle, with a housing (1) which is open at least on one side and in the interior space (2) of which a bearing shell (3) is inserted, which shell in turn holds a joint ball (4) of a ball pin (5) such that it can slide,
**characterised in that**
the interior space (2) of the housing (1) has a polygonal cross section, so that the bearing shell (3), which is oversized relative to the inner surface area (6), is positively inserted in the housing (1) while its outer surface undergoes plastic deformation in part.

3. Ball-and-socket joint according to Claim 1,
**characterised in that**
the elevations and/or depressions (7) extend over the entire height (h) of the housing (1).

4. Ball-and-socket joint according to Claim 1 or 3,
**characterised in that**
the elevations and/or depressions (7) are produced by shaping processes.

5. Ball-and-socket joint according to any one of the preceding Claims,
**characterised in that**
the housing (1) has a hollow cylindrical shape.

6. Ball-and-socket joint according to any one of the preceding Claims,
**characterised in that**
the housing (1) is produced by a cold extrusion process or by machining.

7. Ball-and-socket joint according to any one of the preceding Claims,
**characterised in that**
the bearing shell (3) comprises an outlet opening (8) on one side, through which opening a connection pin (9), which is connected to the joint ball (4), of the ball pin (5) projects, and the bearing shell (3) is closed on the side which lies opposite the outlet opening (8).

8. Ball-and-socket joint according to any one of the preceding Claims,
**characterised in that**
the bearing shell (3) comprises an annular shoulder (10) on one side, which shoulder is supported at an end face of the housing (1) after the bearing shell (3) has been fitted, and the side of the bearing shell (3) which lies opposite this annular shoulder (10) in the axial direction comprises an annular collar (11) which extends axially before assembly and is shaped to form a fixed connection between the bearing shell and the housing (1).

9. Ball-and-socket joint according to Claim 8,
**characterised in that**
the annular collar (11) is shaped by means of a welding process or a rolling process.

10. Ball-and-socket joint according to any one of the preceding Claims,
**characterised in that**
a bonding agent, in particular an adhesive, is introduced between the bearing shell (3) and the housing (1).

11. Ball-and-socket joint for a motor vehicle according to Claim 1 or 2,
**characterised in that**
the inner surface area (6) comprises compression zones (19) which shorten the effective length of the elevations and/or depressions (7).

12. Ball-and-socket joint according to Claim 11,
**characterised in that**
the compression zones (19) lie on at least two annular faces (20a-20d) which are disposed at a spacing from one another and the centre points or centre axes of which lie on the longitudinal centre axis (16) of the housing (1).

13. Ball-and-socket joint according to Claim 12,
**characterised in that**
one of the annular faces (20a) directly adjoins the at least one housing opening.

14. Ball-and-socket joint according to Claim 12,
**characterised in that**
the housing (1) has a hollow cylindrical shape which is open at both end sides, and one of the annular faces (20a, 20d) directly adjoins each of the two housing openings.

15. Ball-and-socket joint according to any one of Claims 11 to 14,
**characterised in that**
the elevations and/or depressions (7) extend parallel to the longitudinal centre axis (16) of the housing (1).

16. Ball-and-socket joint according to any one of Claims 11 to 15,
**characterised in that**
sharp edges or sawtooth-like structures are formed at the inner surface area (6) to increase the extraction force for removing the bearing shell (3) from the housing (1).

## Revendications

1. Articulation à rotule pour un véhicule automobile, en particulier pour une biellette oscillante d'un véhicule automobile, comprenant un boîtier (1) ouvert sur un côté au moins, une coquille de palier (3) étant insérée dans la cavité intérieure (2) du boîtier, recevant à son tour une rotule d'articulation (4) d'un pivot à rotule (5) de façon mobile en glissement,
**caractérisée en ce que** la cavité intérieure (2) comporte des bossages et/ou des renfoncements (7) le long de sa surface périphérique intérieure, de sorte que la coquille de palier (3) présentant une cote de surépaisseur par rapport à la surface périphérique intérieure (6) soit insérée dans le boîtier (1) en subissant une déformation partielle plastique de sa surface extérieure.

2. Articulation à rotule pour un véhicule automobile, en particulier pour une biellette oscillante d'un véhicule automobile, comprenant un boîtier (1) ouvert sur un côté au moins, une coquille de palier (3) étant insérée dans la cavité intérieure (2) du boîtier, recevant à son tour une rotule d'articulation (4) d'un pivot à rotule (5) de façon mobile en glissement,
**caractérisée en ce que** la cavité intérieure (2) du boîtier (1) présente une section transversale polygonale, de sorte que la coquille de palier (3) présentant une cote de surépaisseur par rapport à la surface périphérique intérieure (6) soit insérée dans le boîtier (1) avec conjugaison des formes, en subissant une déformation partielle plastique de sa surface extérieure.

3. Articulation à rotule selon la revendication 1, **caractérisée en ce que** les bossages et/ou renfoncements (7) s'étendent sur toute la hauteur du boîtier (1).

4. Articulation à rotule selon la revendication 1 ou 3, **caractérisée en ce que** les bossages et/ou renfoncements (7) sont créés par des procédés de déformation plastique.

5. Articulation à rotule selon l'une des revendications précédentes, **caractérisée en ce que** le boîtier (1) présente une forme de cylindre creux.

6. Articulation à rotule selon l'une des revendications précédentes, **caractérisée en ce que** le boîtier (1) est réalisé selon un procédé de matriçage à froid ou par usinage par enlèvement de copeaux.

7. Articulation à rotule selon l'une des revendications précédentes, **caractérisée en ce que** la coquille de palier (3) présente d'un côté une ouverture de sortie (8), à travers laquelle un tourillon de fixation (9) d'un pivot à rotule fait saillie à l'extérieur, et que la coquille de palier (3) est réalisée fermée du côté de celle-ci, qui est opposé à l'ouverture de sortie (8).

8. Articulation à rotule selon l'une des revendications précédentes, **caractérisée en ce que** la coquille de palier (3) comporte d'un côté une collerette annulaire (10) qui, après le montage de la coquille de palier (3), s'appuie sur une surface frontale du boîtier (1), et que le côté de la coquille de palier (3), qui est axialement opposé à cette collerette annulaire (3), comporte un rebord annulaire (11) s'étendant dans le sens axial avant le montage et étant destiné à être déformé pour produire une liaison fixe entre la coquille de palier et le boîtier (1).

9. Articulation à rotule selon la revendication 8, **caractérisée en ce que** le rebord annulaire (11) est déformé au moyen d'un procédé de soudage ou de roulage.

10. Articulation à rotule selon l'une des revendications précédentes, **caractérisée en ce qu'**un liant, en particulier une colle, est introduit(e) entre la coquille de palier (3) et le boîtier (1).

11. Articulation à rotule pour un véhicule automobile selon la revendication 1 ou 2, **caractérisée en ce que** la surface périphérique intérieure (6) présente des zones de pression (19) réduisant la longueur effective des bossages et/ou renfoncements (7).

12. Articulation à rotule selon la revendication 11, **caractérisée en ce que** les zones de pression (19) sont situées à la hauteur d'au moins deux surfaces annulaires (20a à 20d) aménagées à une distance les unes des autres, dont les centres ou axes centraux coïncident avec l'axe longitudinal central (16) du boîtier (1).

13. Articulation à rotule selon la revendication 12, **caractérisée en ce que** l'une des surfaces annulaires (20a) est adjacente à ladite au moins une ouverture du boîtier.

14. Articulation à rotule selon la revendication 12, **caractérisée en ce que** le boîtier (1) présente une forme cylindrique creuse ouverte sur les deux faces frontales, et que l'une des surfaces annulaires (20a, 20d) est respectivement adjacente à chacune des deux ouvertures du boîtier.

15. Articulation à rotule selon l'une des revendications 11 à 14, **caractérisée en ce que** les bossages et/ou renfoncements (7) s'étendent parallèlement à l'axe médian longitudinal (16) du boîtier (1).

16. Articulation à rotule selon l'une des revendications 11 à 15, **caractérisée en ce que** des arêtes vives ou des structures de dents de scie sont aménagées à la surface périphérique intérieure (6), augmentant l'effort d'arrachement nécessaire pour sortir la coquille de palier (3) du boîtier (1).
